# EUROPEAN PATENT APPLICATION

(11) **EP 1 688 736 A1**
(43) Date of publication of application: **09.08.2006**
(21) Application number: 04793001.1
(22) Date of filing: 27.10.2004
(51) Int. Cl.: G01N 27/404, G01N 27/416

(54) **ELECTROCHEMICAL GAS SENSOR**

(30) Priority: 30.10.2003 JP 2003370897
(71) Applicant: RIKEN KEIKI CO., LTD., Tokyo 174-0051 (JP); Mizutani, Yoshitaka, Itabashi-ku, Tokyo 1740051 (JP)
(72) Inventor: MIZUTANI, Yoshitaka, Itabashi-ku, Tokyo 1740051 (JP); MATSUDA, Hiroyuki, Itabashi-ku, Tokyo 1740051 (JP); ISHIJI, Toru, Itabashi-ku, Tokyo 1740051 (JP); FURUYA, Nagakazu, Kofu-shi, Yamanashi 4000024 (JP)
(74) Representative: Haley, Stephen
(86) International application number: PCT/JP2004/015885
(87) International publication number: WO 2005/043147

(57) **Abstract**

The present invention provides an electrochemical gas sensor that can restrict to the extent possible interference errors. The electrochemical gas sensor draws a gas to be measured into an electrolyte solution through a permeable membrane and outputs an electrical signal corresponding to the concentration of said gas that is measured, with a permeable membrane 4 constituting a working electrode 4' being formed from a mixture of a carbon black powder and a fluorine resin powder, and an electrode catalyst layer 13 formed on the side of the permeable membrane 4 in contact with an electrolyte solution

## Description

### BACKGROUND OF THE INVENTION

### Field of the Invention

The present invention relates to an electrochemical gas sensor that determines the concentration of a gas to be measured by passing the gas through a permeable membrane and generating a measurement signal from oxidation-reduction electric current produced between a working electrode and a counter electrode.

### Description of Related Art

There is known an electrochemical gas sensor that comprises a container that holds an electrolyte solution; a gas-permeable porous polytetrafluroethylene (PTFE) membrane provided in a tensioned state across a portion of the container; an electrically conductive catalytic electrode layer that is formed on the electrolyte solution-side of the membrane and has a catalytic action with respect to the gas to be measured; and a counter electrode spaced apart from the catalytic electrode layer, with an electrolytic current flowing between the catalytic electrode layer and the counter electrode being measured.

When measuring hydride gases such as arsine (AsH₃), phosphine (PH₃), silane (SiH₄), germane (GeH₄) and diborane (B₂H₆), the accuracy of measuring the target gas is adversely affected by the presence of ozone and hydrogen chloride present in the atmosphere.

Also, when attempting to measure nitrogen dioxide (NO₂) present in the atmosphere using such an electrochemical gas sensor, the measurement accuracy is adversely affected by ozone present at a comparatively higher concentration in the atmosphere.

Patent Document 1 (Japanese Unexamined Patent Application, Publication No. H01-239446) discloses a constitution similar to the working electrode of the present invention. Although the gas sensor disclosed therein has a high sensitivity to chlorine and hydrogen sulfide, no constitution is disclosed that is deemed to be particularly effective toward hydride gases and nitrogen dioxide.

The gas sensor disclosed in Patent Document 1 basically employs a hydrophobic porous membrane that consists of an electrically conductive material dispersed in polytetrafluroethylene as a detection electrode (working electrode). Moreover, a thin film of gold, platinum, silver or palladium formed on the surface thereof is essentially just a subsidiary material, and the electrolyte solution is potassium chloride.

In this way, a lead arranged so as to contact the working electrode is also in contact with the electrolyte solution, and so when the electrolyte solution is one of strong acidity, it is necessary to use a noble metal such as platinum for the lead to impart corrosion resistance, thereby raising the manufacturing cost. Also, because the electrolyte solution leaks from tiny gaps between the lead and the membrane (working electrode), there is the problem of requiring a tightly sealed construction.

Patent Document 1 discloses that the gas sensor basically uses a hydrophobic porous membrane consisting of an electrically conductive material dispersed in polytetrafluroethylene as a detection electrode (working electrode), with the measurement signal extracted by disposing an electrically conductive material to be in contact the hydrophobic porous membrane. However, since the hydrophobic porous membrane is formed in a tubular shape, a special structure is required for taking in the gas to be measured and sealing the electrolyte solution, thereby complicating the structure.

The present invention was achieved in view of the above circumstances, and has as its object providing an electrochemical gas sensor that can improve the measurement sensitivity with respect to hydride gases and restrict to the extent possible interference errors due to hydrogen chloride and ozone.

Another object of the present invention is to provide a novel electrochemical gas sensor in which the leads are arranged apart from the electrolyte solution while ensuring highly reliable contact between the leads and the gas-permeable membranes.

### SUMMARY OF THE INVENTION

The invention according to claim 1 is an electrochemical gas sensor that draws a gas to be measured into an electrolyte solution through a permeable membrane and measures the concentration of said gas to be measured by an electrolytic current that flows between an electrode catalyst layer formed on one side of said permeable membrane and a counter electrode, wherein said permeable membrane is formed from a mixture of a carbon black powder and a fluorine resin powder, and said electrode catalyst layer is formed on the side of said permeable membrane in contact with the electrolyte solution.

The invention according to claim 6 is an electrochemical gas sensor comprising: a working electrode that reacts with a gas to be measured, consisting of a hydrophobic, electrically conductive membrane that is permeable by said gas to be measured and an electrode catalyst layer formed on one side thereof; a counter electrode consisting of a hydrophobic, electrically conductive membrane and an electrode layer formed on one side thereof; a container that holds an electrolyte solution, and; two leads that extract a measurement signal from said working electrode and said counter electrode; wherein one of said leads is disposed so as to be in contact with the side of said working electrode on which said electrode catalyst layer is not formed, and the other of said leads is disposed so as to be in contact with the side of said counter electrode on which said electrode layer is not formed, with said leads being pressed against said membranes by constituent elements of said container.

### BRIEF DESCRIPTION OF THE DRAWINGS

FIG. 1 is a sectional view showing one embodiment of the electrochemical gas sensor af the present invention.
FIG. 2 is a magnified view of the area outlined in the circle A of FIG. 1, showing the area near one of the leads of the electrochemical gas sensor.
FIG. 3 is a sectional view showing another embodiment of the electrochemical gas sensor of the present invention.
FIG. 4 is a sectional view showing yet another embodiment of the electrochemical gas sensor of the present invention.

### DETAILED DESCRIPTION OF THE INVENTION

The electrochemical gas sensor of the present invention shall be described in detail below with reference to the accompanying drawings.

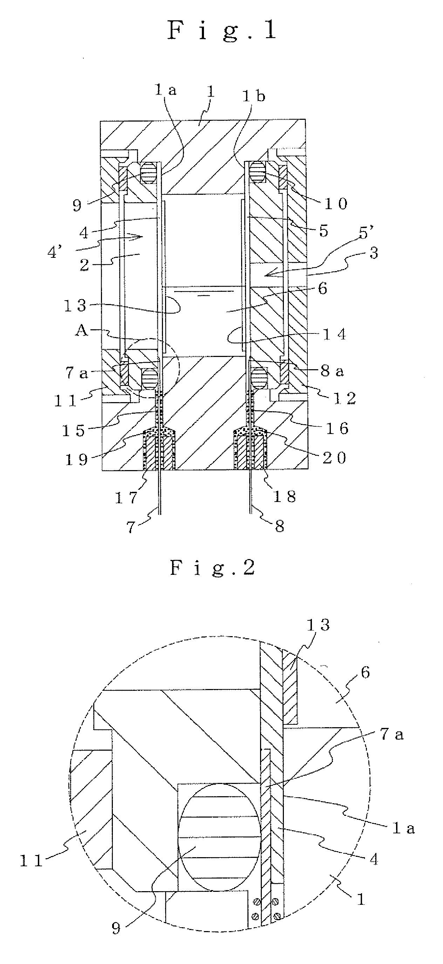

FIG. 1 shows the first embodiment of the electrochemical gas sensor of the present invention. Windows 2 and 3 consisting of through-holes are formed in facing walls of a container 1 that holds an electrolyte solution consisting of sulfuric acid. A working electrode 4' and a counter electrode 5' are provided in a tensioned state across the windows 2 and 3, respectively. The working electrode 4' consists of a permeable membrane 4 and an electrode catalyst layer 13, while the counter electrode 5' consists of a permeable membrane 5 and an electrode layer 14. A lead 7 is disposed on the side of the permeable membrane 4 not in contact with the electrolyte solution 6, and a lead 8 is disposed on the side of the permeable membrane 5 not in contact with the electrolyte solution 6. The leads 7 and 8 are respectively locked in place by securing rings 11 and 12, with packings 9 and 10 interposed between the outer side of the leads 7 and 8 and the securing rings 11 and 12.

Since sulfuric acid, which constitutes the electrolyte solution 6, is hygroscopic, its content ranges from 10 to 70 wt% (1 to 11.5 mol/d1) over a relative humidity (RH) range of its environment of 3 to 95%.

The working electrode 4' shall now be described in detail.

The working electrode 4' is constituted by the permeable membrane 4, which allows the passage of hydride gas, and the electrode catalyst layer 13 consisting of a gold (Au) thin film on one surface of the membrane 4.

The gold thin film constituting the electrode catalyst layer 13 is formed by vapor depositing, sputtering or ion plating gold (Au).

The membrane 4 is produced by the following process.

A surfactant is added to acetylene carbon black powder and sufficiently distributed using an ultrasonic distributor. Then, a fluorine resin powder is dispersed and mixed therein, and isopropyl alcohol is added, followed by condensing, filtration and drying of the dispersion.

Solvent naphtha is sufficiently mixed into the dried material, which is rolled into a membrane-like shape, and by vaporization of the naphtha, a sheet is obtained. This sheet is then placed in an extractor that holds ethyl alcohol to remove the surfactant, dried and hot pressed to obtain a gas-permeable sheet.

Any fluorine resin that can be powderized may be used as the fluorine resin powder, such as polytetrafluoroethylene (PTFE), tetrafluoroethylene hexafluoropropylene (FEP), tetrafluoroethylene/per-fluoroalkylvinylether copolymer (PFA), tetrafluoroethylene/ethylene copolymer (ETFE), polyvinyliden-fluoride (PVDF), and polychlorotrifluoroethylene (PCTFE).

The leads 7 and 8 are drawn to the outside through lead-out holes 15 and 16 bored in the container 1 and sealed with adhesive agents 19 and 20, with plugs 17 and 18 interposed therebetween as required.

According to the present embodiment, as represented on the window 2 side in FIG 2, since there are no conventional inclusions such as a lead between the wall surface 1a (1b) of the container 1 that partitions the window 2 (3) and the membrane 4 (5), the two surfaces can be uniformly pressure contacted to easily constitute a fluid-tight structure.

A distal end portion 7a (8a) of the lead 7 (8) that is pressure contacted against the external surface of the membrane 4 (5), that is, the side of the membrane 4 (5) that is not in contact with the electrolyte solution, forms an electrically conductive relationship with the electrode conductive layer 13 by means of the electrical conductivity of the membrane 4 that constitutes the working electrode.

In the present embodiment, the counter electrode is constituted by forming the electrode layer 14 with gold (Au) on the membrane 5 that is electrically conductive, similarly to the working electrode. Therefore, the flat distal end portion 8a of the lead 8 that is pressure contacted against the surface of the membrane 5 not in contact with the electrolyte solution 6 forms an electrically conductive relationship with the electrode layer 14 by means of the electrical conductivity of the membrane 5.

In this way, since the leads 7 and 8 are completely isolated from the electrolyte solution 6 by the membranes 4 and 5, even if composed of non-noble metals they are not susceptible to corrosion and allow a reduction in material costs.

In the present embodiment, the counter electrode was described as having a constitution resembling the working electrode. However, instead of forming an electrode layer on the membrane 5, it would be obvious to those skilled in the art that the same effect can be achieved with a plate of platinum (Pt) or ruthenium (Ru), the same material as the working electrode, being disposed in the electrolyte solution so as to be overlayed on the permeable membrane 5. By means of the electrical conductivity of the membrane 5, the plate is electrically continuous with the lead 8.

In the present embodiment, the gas to be measured that flows in from the window 2, which serves as the intake port, passes through fine pores of the membrane 4 of the working electrode 4' to reach the electrode catalyst layer 13. An electrolytic current that corresponds to the concentration of the gas being measured then flows between the electrode catalyst layer 13 of the working electrode and the electrode layer 14 of the counter electrode. By measuring this current, the concentration of the gas to be measured can be determined.

Meanwhile, when an interfering gas such as ozone or hydrogen chloride is contained in the gas to be measured, compared to hydride gas and nitrogen dioxide, this ozone or hydrogen chloride can be easily adsorbed in the carbon black powder that is a component of the membrane 4 constituting the working electrode 4' and so is prevented from reaching the electrode catalyst layer 13.

Thereby, there is hardly any generation of electrolytic current caused by ozone or hydrogen chloride, allowing highly accurate measurement of the gas to be measured.

### Measurement Example

Various hydride gases were measured as reference gases by an electrochemical sensor with a conventional working electrode employing a conventional porous polytetrafluoroethylene membrane and another electrochemical sensor employing the working electrode 4' of the present invention. Specifically, the gases and their concentrations were: diborane (B₂H₆) 5 ppm, germane (GeH₄) 0.8 ppm, arsine (AsH₃) 0.5 ppm, silane (SiH₄) 8 ppm, phosphine (PH₃) 0.5 ppm and hydrogen selenide (SeH₂) 1 ppm. As shown in Table 1, the measurement sensitivity (output ratio) of the working electrode 4' of the present invention was 23 times higher for diborane, 3.8 times higher for germane, 2.3 times higher for arsine, 3.6 times higher for silane, 2.4 times higher for phosphine, and 1.8 times higher for hydrogen selenide (SeH₂).

**Table 1**

| Gas Name/ Concentration | Sensor Output | | Output Ratio |
|---|---|---|---|
| | Present Invention | Conventional Article | |
| B₂H₆/5 ppm | 5.95µA | 0.26µA | 23 times |
| GeH₄/0.8 ppm | 0.57µA | 0.15µA | 3.8 times |
| AsH₃/0.5 ppm | 1.36µA | 0.59µA | 2.3 times |
| SiH₄/8 ppm | 3.72µA | 1.02µA | 3.6 times |
| PH₃/0.5ppm | 1.60µA | 0.67µA | 2.4 times |
| SeH₂/1 ppm | 6.62µA | 3.60µA | 1.8 times |

In addition, arsine (AsH₃) (0.5 ppm), silane (SiH₄) (8 ppm) and phosphine (PH₃) (0.5 ppm) were continuously measured by the present invention and the conventional article, with their outputs at 63 days and 257 days compared in Tables 2 to 4. As is evident from the tables, the percentage decrease in the present invention was less than that of the conventional article, proving that the present invention has greater long-term stability than the conventional article.

**Table 2 Arsine (AsH₃) 4.5 ppm**

| Electrode Type | Output at 63^{rd} day | Output at 257^{th} day | Percentage of original output |
|---|---|---|---|
| Present invention | 1.36µA | 1.2µA | 88% |
| Conventional article | 0.59µA | 0.44µA | 75% |

**Table 3 Silane (SiH₄) 8 ppm**

| Electrode Type | Output at 63^{rd} day | Output at 257^{th} day | Percentage of original output |
|---|---|---|---|
| Present invention | 3.72µA | 3.22µA | 87% |
| Conventional article | 1.02µA | 0.78µA | 76% |

**Table 4 Phosphine (PH₃) 0.5 ppm**

| Electrode Type | Output at 63^{rd} day | Output at 257^{th} day | Percentage of original output |
|---|---|---|---|
| Present invention | 1.60µA | 1.44µA | 90% |
| Conventional article | 0.67µA | 0.52µA | 78% |

In addition, 2 ppm of nitrogen dioxide (NO₂), 0.3 ppm of ozone (O₃) and 6 ppm of hydrogen chloride (HCl) were measured as reference gases by one electrochemical sensor with a conventional working electrode employing a conventional porous polytetrafluoroethylene membrane and another electrochemical sensor using the working electrode 4' of the present invention. As shown in Table 5, the measurement sensitivity (output ratio) of the working electrode 4' of the present invention was 2, 0.04, and 0.32 times that of the sensitivity of the conventional article for nitrogen dioxide, ozone, and hydrogen chloride, respectively.

Thus, while the sensitivity of the electrochemical sensor of the present invention to ozone (O₃) dropped, the sensitivity to nitrogen dioxide (NO₂) rose. Therefore, when using the electrochemical sensor of the present invention for the purpose of measuring nitrogen dioxide in the atmosphere, nitrogen dioxide can be measured with a high sensitivity and accuracy while suppressing interference due to ozone.

**Table 5**

| Gas Name/ Concentration | Sensor Output | | Output Ratio |
|---|---|---|---|
| | Present Invention | Conventional Article | |
| NO₂/2 ppm | 1.2µA | 0.60µA | 2 times |
| O₃/0.3 ppm | 0.02µA | 0.53µA | 0.04 times |
| HCL/6 ppm | 1.4µA | 4.4µA | 0.32 times |

The aforementioned embodiment described the use of sulfuric acid as an electrolyte solution. However, diborane (B₂H₆), germane (GeH₄), silane (SiH₄), arsine (AsH₃), hydrogen selenide (SeH₂), phosphine (PH₃), and nitrogen dioxide (NO₂) can be detected at a greater sensitivity than with a conventional working electrode even if an aqueous solution of pbosphoric acid, an aqueous solution of sodium sulfate, or an aqueous solution of potassium sulfate is used as the electrolyte solution in the electrochemical gas sensor of the present invention.

Even if propylene carbonate, which is an organic electrolyte employed as an electrolyte solution in lithium batteries and the like, is used as the electrolyte solution, diborane (B₂H₆), germane (GeH₄), silane (SiH₄), arsine (AsH₃), hydrogen selenide (SeH₂), phosphine (PH₃), and nitrogen dioxide (NO₂) can similarly be detected at a greater sensitivity than with a conventional working electrode.

For example, in the case of measuring 0.5 ppm of arsine (AsH₃) with a gas sensor employing propylene carbonate as the electrolyte solution and the working electrode of the present invention, the sensor output was 0.75 µA, as opposed to 0.42 µA by a sensor using a conventional working electrode.

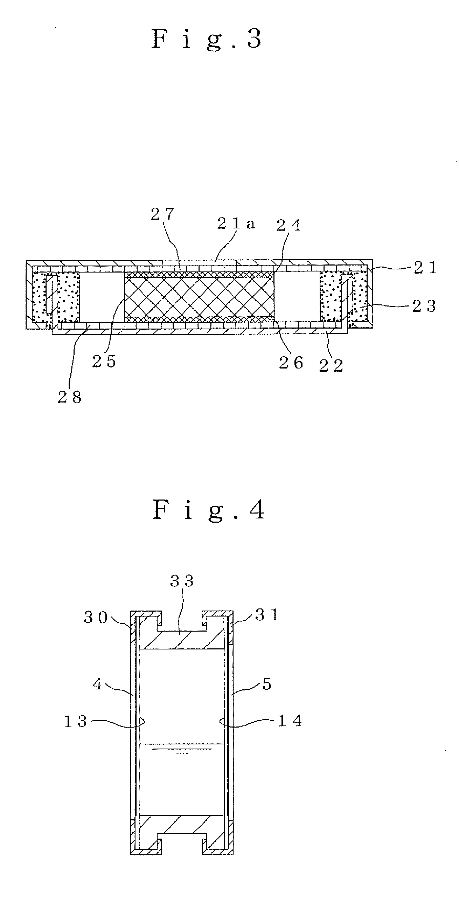

In the above-described embodiment, the electrode catalyst layer 13 and the electrode layer 14 were electrically connected to the outside using the leads 7 and 8. However, as shown in FIG 3, in the case of constituting the container with caps 21 and 22 made of an electrically conductive material such as metal, since the cap 21 contacts the membrane 4, the caps can be made to incorporate the function of the leads described above.

That is, the caps 21 and 22 constitute a container by being integrally fit together to be liquid-tight using annular packing 23. A window 21 a is formed in the cap 21. A permeable membrane 27 having electrical conductivity is disposed on the inside surface of the cap 21 so as to face the window 21a, and an electrode catalyst layer 24 that functions as the working electrode described above is formed on the internal side of the membrane 27. A porous ceramic plate 25 that is impregnated with an electrolyte solution is disposed to be in contact with the electrode catalyst layer 24. Similarly to the membrane 27, a permeable membrane 28 having electrical conductivity is disposed on the inside surface of the cap 22, and an electrode 26 that functions as a counter electrode is disposed on the inside surface of the membrane 28 so as to be in contact with the ceramic plate 25. The electrode 26 that functions as the counter electrode is thus integrally formed on the membrane 28 on the inside of the container.

According to this constitution, the cap 21; the electrically conductive, permeable membrane 27 on which the electrode catalyst layer 24 is formed; the porous ceramic plate 25 that is impregnated with an electrolyte solution; the electrically conductive, permeable membrane 28; and the cap 22 are layered in the order without requiring a construction in which leads are specially provided. By sealing the caps 21 and 22 with the packing 23, the cap 21 is electrically continuous with the electrode catalyst layer 24 via the permeable membrane 27 having electrical conductivity, and the cap 22 is electrically continuous with the electrode 26 via the permeable membrane 28 having electrical conductivity. Thereby, the gas sensor can be easily assembled without requiring a special lead connection procedure.

FIG 4 shows another embodiment of the present invention. In this embodiment, in place of the fixing rings 11 and 12 in the embodiment shown in FIG. 1, the electrically conductive, permeable membrane 4 on which the electrode catalyst layer 13 is formed, and the electrically conductive, permeable membrane 5 on which the electrode layer 14 is formed to function as a counter electrode are oppositely disposed in a container 33 made of an insulating material. Metal bands 30 and 31 wind around the surface so as to sandwich the respective outer surfaces that form two flat surfaces that are opposed.

According to this embodiment, the electrode catalyst layer 13 and the electrode layer 14 serving as a counter electrode form an electrical relationship with the metal bands 30 and 31 via the electrical conductivity of the permeable membranes 4 and 5 that are electrically conductive. Therefore, these metal bands 30 and 31 can be used as leads.

### Industrial Applicability

The present invention can provide an electrochemical gas sensor that improves the measurement sensitivity with respect to hydride gases and restricts to the extent possible interference errors due to hydrogen chloride and ozone.

Moreover, the present invention can provide an electrochemical gas sensor in which the leads are arranged apart from the electrolyte solution while ensuring highly reliable contact between the leads and the membranes.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### Brief Description of the Reference Symbols

1 container; 2 gas intake window; 4 permeable membrane having electrical conductivity; 4' working electrode; 5' counter electrode; 5 permeable membrane; 14 electrode; 6 electrolyte solution; 7, 8 leads; 11, 12 fixing rings; 13 electrode catalyst layer; 17, 18 plugs; 24 electrode catalyst layer; 25 porous ceramic plate 25; 26 electrode that functions as counter electrode; 27, 28 permeable membranes having electrical conductivity; 30, 31 metal bands; 33 container

## Claims

1. An electrochemical gas sensor that draws a gas to be measured into an electrolyte solution through a permeable membrane and measures the concentration of said gas to be measured by an electrolytic current that flows between an electrode catalyst layer formed on one side of said permeable membrane and a counter electrode,
wherein said permeable membrane is formed from a mixture of a carbon black powder and a fluorine resin powder, and said electrode catalyst layer is formed on the side of said permeable membrane in contact with the electrolyte solution.

2. An electrochemical gas sensor in accordance with claim 1, wherein said gas to be measured is diborane (B₂H₆), germane (GeH₄), silane (SiH₄), arsine (AsH₃), hydrogen selenide (SeH₂), or phosphine (PH₃).

3. An electrochemical gas sensor in accordance with claim 1, wherein said gas to be measured is nitrogen dioxide (NO₂).

4. An electrochemical gas sensor in accordance with claim 1, wherein said electrolyte solution is sulfuric acid.

5. An electrochemical gas sensor in accordance with claim 4, wherein the concentration of said electrolyte solution is 1 to 11.5 mol/dl.

6. An electrochemical gas sensor comprising:
a working electrode that reacts with a gas to be measured, consisting of a hydrophobic, electrically conductive membrane that is permeable by said gas to be measured and an electrode catalyst layer formed on one side thereof;
a counter electrode consisting of a hydrophobic, electrically conductive membrane and an electrode layer formed on one side thereof;
a container that holds an electrolyte solution, and;
two leads that extract a measurement signal from said working electrode and said counter electrode;
wherein one lead is disposed so as to be in contact with the side of said working electrode on which said electrode catalyst layer is not formed, and the other lead is disposed so as to be in contact with the side of said counter electrode on which said electrode layer is not formed, with said leads being pressed against said membranes by constituent elements of said container.

7. An electrochemical gas sensor in accordance with claim 6, wherein said membranes are formed from a mixture of a carbon black powder and a fluorine resin powder.

8. An electrochemical gas sensor in accordance with claim 6, wherein at least a portion of said container is constituted from electrically conductive material, with the area of said electrically conductive material being arranged to be in contact with the surfaces of said membranes on which electrodes are not formed, so that said container incorporates the function of said leads.
